# EUROPEAN PATENT APPLICATION

(11) **EP 3 849 144 A2**
(43) Date of publication of application: **14.07.2021**
(21) Application number: 20000269.9
(22) Date of filing: 27.10.2014
(51) Int. Cl.: H04L 12/28, H04L 12/715, H04L 29/08, H04L 12/46, H04L 29/12, H04L 29/06

(54) **NETWORK ARCHITECTURE WITH FIXED ROUTING**

(30) Priority: 25.10.2013 US 201361962311 P; 06.01.2014 US 201461923829 P
(62) Divisional of application: 14855509.7
(71) Applicant: Li, Lei, Hershey, PA 17033 (US)
(72) Inventor: Li, Lei, Hershey, PA 17033 (US)
(74) Representative: Viering, Jentschura & Partner mbB Patent- und Rechtsanwälte

(57) **Abstract**

The closed computer network with the highly secured architecture of local operating systems, regional systems and global operating systems logically connects the computer user and mobile users globally. The applications of business services are also logically connected to the network globally for the computer users and mobile users to search in the intersection system in the network. The network provides the computer users and mobile users with the centralized and fixed services and functions with the features of the fixed addresses and fixed routing. The transmission system in the network uses the fixed routing and its rules with defined 7 layers of Transmission Control Protocols to transfer the data. Inner Connection and other feathers are defined in the network.

## Description

This application claims the benefit of Provisional Patent Application Ser. No. 61/962,311 filed October 25, 2013 and No. 61/923,829 filed January 6, 2014, entitled "NETWORKING THE PERSONAL COMPUTERS" and "PERSONAL COMPUTER NETWORK, MOBILE CONNECTION AND SEARCHING SYSTEMS". This application is a divisional application of European patent granted 3172867, which will be published in European Patent Bulletin on July 29, 2020.

### Field of the Invention

The present invention is directed to the architecture of a new personal computer network (PCN 100) to network personal computers globally. The network 100 has architecture with local operating systems 18, regional operating systems 20 and global operating system 24 to networking the personal computer users 10 and mobile users in the areas and connects the computer users 10 and mobile users globally. With the architecture, the network also logically connects the business applications to the network to provide centralized functions and services to the computer users and mobile users. The network has fixed addressing system and fixed routing to logically transfer the information. The network will provide us with a secure and efficient computer environment.

### Background of the Invention

The closed computer network PCN 100 is designed to logically connect the global computer users and mobile users, as well as the business applications to the network with the architecture of Local Operating System, Regional Operating System, Global Operating System and Transmission System, and provide the computer users and mobile users with the centralized and fixed services and functions with the features of fixed routing and fixed addressing system. The network will authenticate the computer users and mobile users by itself directly in the closed network.

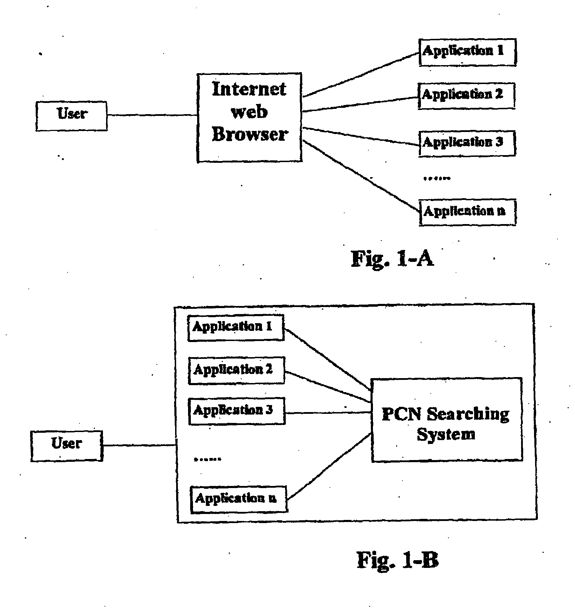

The proposed PCN 100 differs from the Internet in which all computer users 10 and mobile users are connected to the same network 100 (shown as Fig.1) to provide the computer users and mobile users with the centralized and fixed services and functions. The computer users and mobile users can search information in the closed network 100.

PCN 100 is a closed network. The user is connected to the local operating system of the network 100. The local operating systems, regional operating systems and global operating systems are installed in the buildings and distributed globally. All the operating systems in the network are identified with the country codes and area codes.

The operating systems are defined as Local Operating Systems 18, Regional Operating Systems 20, and Global Operating Systems 24 to connect the computer users 10, business applications and application servers globally, and transfer data through the network 100 with the fixed routing and fixed addressing system .

One of most important advantages of the designs includes that the PCN 100 can have fixed routing. Besides, PCN 100 provides us with a high security network centralized and fixed services and functions of the network with logical control and the fixed routing and the fixed addressing system, an easy expanding and extending structure, and highly efficient performance. The architecture of PCN 100 provides a sophisticated computer network for the computer users globally.

### Summary of the Invention

The computer users 10 are connected to local operating systems of the Personal Computer Network 100 through gateway router. The local operating systems are distributed globally and installed in the buildings to network local computer users 10. Operating systems are defined as Local Operating Systems 18, Regional Operating Systems 20 and Global Operating System 24. All the business applications and servers are logically connected to operating systems. All the operating systems in the network 100 are identified by the country code and area code which are defined by the developer and approved by the international authorization.

The functions of interface of the computer user are to connect all the workstations at home to form a sub-network. The interface functions as the central server of the sub-network. All the workstations, such as telephone service, security camera service, printing service, computers can be included in the sub-network. The interface of the computer user also provides the services and functions for the computer user and mobile user. Therefore, the interface will be capable of communicating with the network for all kinds of data, such as regular data, voice data, imagine data, video data and so on.

The interface also has functions to process and control the data for the workstations of the computer user to communicate with the network. At mean time, the interface has functions to manage and control the files for the workstations of the computer user to receive from the network.

More importantly, interface contains Network Directory which has a database of the information of applications and their geography for the computer user and mobile user to search in the closed network. Please also see Embodiment 3.

All the elements, business applications and application servers logically connected to the network have their permanent identification numbers in the network, except computer users 10 and mobile users in the network 100. The identification numbers are defined by the developer and approved by the international authorization.

The gateway router is used to transfer the data of the sub-network of the computer user to the network. The gateway router not only functions for the transit of data, but also for the logical connection of the computer user to the network. In addition, the gateway router will function for the security purpose by accepting and rejecting the data with programs.

With the country codes, area codes and identification numbers, all the elements' and applications' and application servers' addresses are determined. The fixed address contains the country code, area code and the identification number.

With determined addresses, architecture of the network and the rules of fixed routing (please see Page 12, the fixed routing and rules of fixed routing), the fixed routing to transfer the data can be established in the PCN network 100.

The features of the network 100, including the architecture of the network 100 and fixed routing and logical control in the network 100 result in the high secure and efficient performance of the network 100.

With the architecture of network PCN logically connecting the global computer users, mobile users, and business information applications and application servers, PCN enables the computer users and mobile users to search in the closed network locally and globally with fixed routing and logical control.

### Brief Description of the Drawings

Figure 1 indicates the different connections for the computer users and applications between the internet 11 and PCN 100.
Figure 2 shows a group of individual computer users 10 and individual Business Information applications and application servers logically networked to the Personal Computer Network (PCN 100), and interfaces and routers are used to connect the computer users.
Figure 3 shows exemplary physical and logic connections for the groups of computer users 10 in New York City in the United States communicating with the computer users in the country and globally.
Figure 4 shows how the computer users, mobile users, applications, and application servers are logically connected Personal Computer Network (PCN 100) with the interfaces and routers.
Figure 5 shows the intersection searching systems in the Network (100).

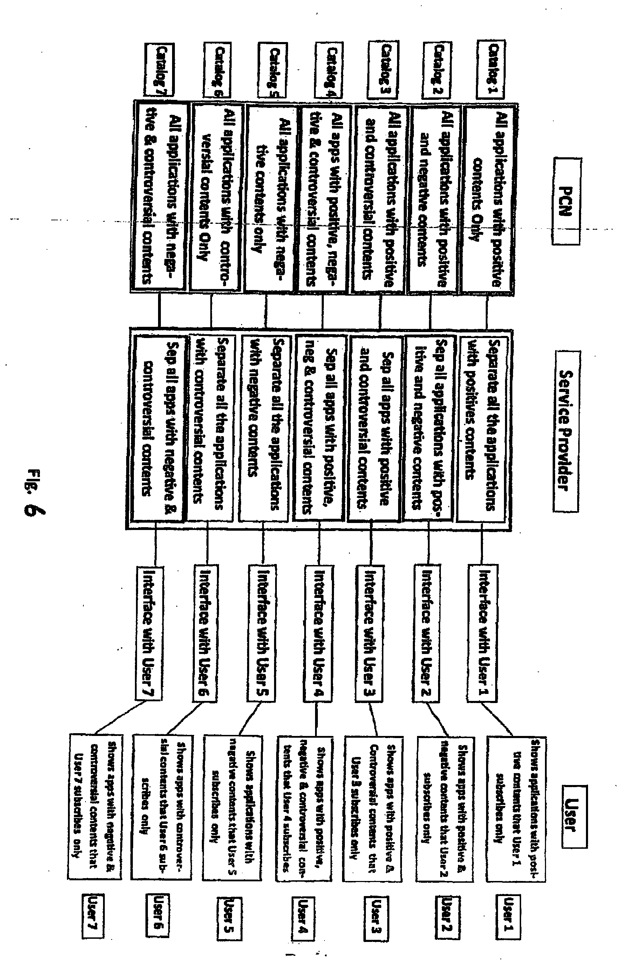

Figure 6 indicates how PCN 100, service provider 50 and interface 52 control and manage the contents of the applications in the network 100 and present them to the computer users 10 with what they subscribe.
Figure 7 shows a flow chart to indicate how user 10 can login into the network 100 from the location where the country code and area code are different from his original location where he has registered.
Figure 8 shows the mobile users logically connected to the network unifies the home computers with the file system and unification system in the network (100).

### Detailed Description

### Network Architecture

PCN 100 architecture is designed to network the personal computer users 10, mobile users and business information applications and application servers and communicate each other globally. The architecture, including logical connections and physical connections of PCN 100 has been shown as Figure 1, Figure 2, Figure 3, and Figure 4.

PCN 100 is a closed network. The computer users 10 login onto the network 100 with their users' names and passwords. The network authenticates the computer users and mobile users directly.

In internet, all the applications are connected to the internet by web browser, and computer users search with an open system interconnection. Unlike Internet, PCN 100 connects all the applications into the network 100 logically and search in the closed network 100 (shown as Figure 1).

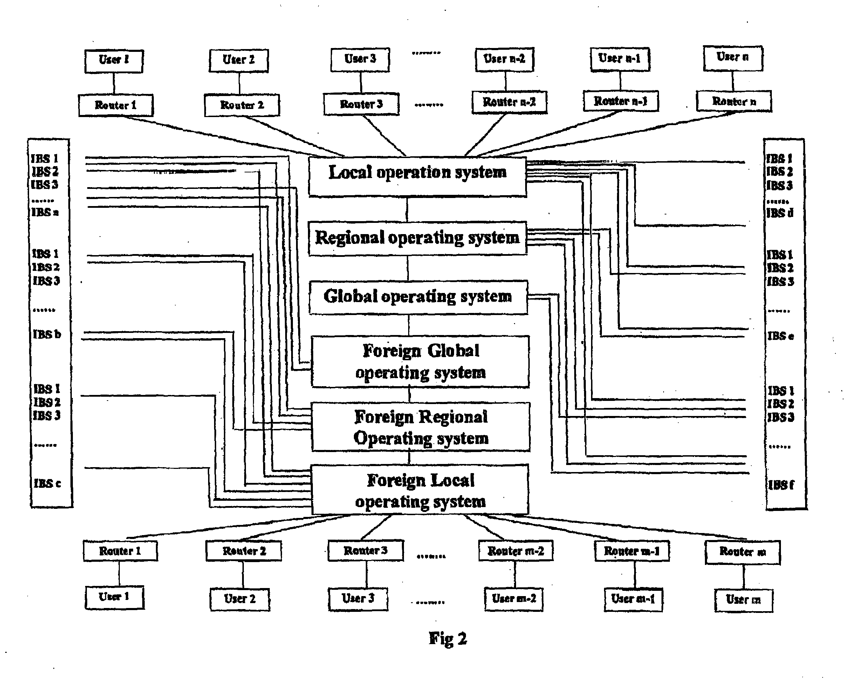

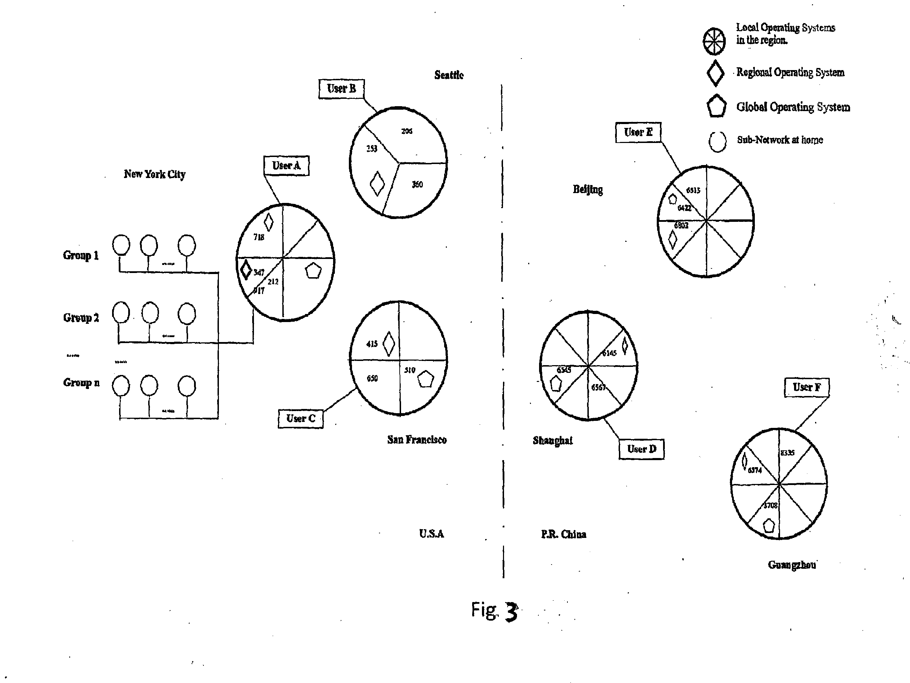

As indicated in Figure 2, a group of users 10 are connected to local operating system 18 of PCN 100 through their own interface 52 and gateway router 16. The operating systems distributed all over the world are defined as local operating systems 18, regional operating systems 20 and global operating systems 24 with individual business information applications and application servers logically connected to the operating systems, (shown as Figure 3)

Local operating systems 18, regional operating systems 20 and global operating systems 24 are defined relatively and functionally. Local operating systems 18 are designed to network the computer users 10 in the area; Regional operating systems 20 are designed not only to network the computer users 10 in the area, but also to communicate with the local operating systems 18 in the region and communicate with other regional operating systems 20 in the country and the global operating systems 24 in the country as well; Global operating systems 24 are designed not only to network the computer users 10 in the area, but also to communicate with regional operating systems 20 in the country and foreign global operating systems across the world.

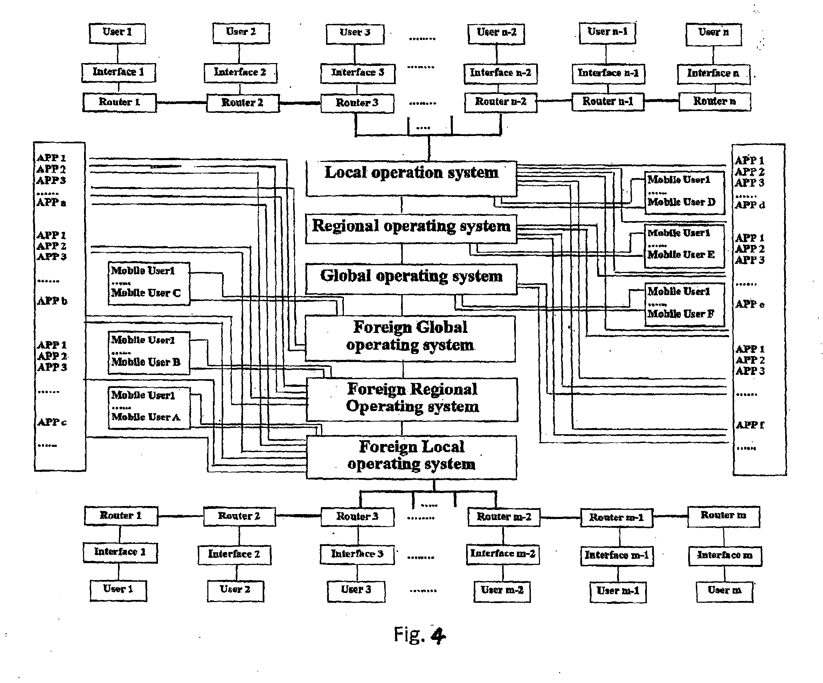

Shown as Figure 2 and Figure 4, each computer user has own interface which connects all the workstations at home to form the sub-network and communicate with the network. Each computer user has own router for transmitting the data with the network. Figure 4 also shows that the applications and application servers are logically connected to the network, as well as the mobile computer users.

This design of Figure 3 indicates the concept how local operating systems 18, regional operating systems 20 and global operating systems 24 are distributed in the country and globally.

The architecture of PCN 100 can be completed after the applications and application servers, also called Individual Business Servers (IBS) are connected to the network 100. The business information is developed into the application and app ication server and logically connected to Operating System(s) of PCN 100.

Every time when application and application server are connected to PCN 100, the application and application server will be given a protocol called Network Business Protocol (NBP) to identify the application in the network 100. NBP is provided not only to identify the application and application server in the network, but also to increase the security of network 100.

Network User Protocol is given to the computer user who is logically connected to the network; Network Mobile Protocol is given to the mobile user who is logically connected the network; Network Application Protocol is given to the application and application server when they are logically connected to the network. These three protocols are not transmission control protocol. Instead, they are functional protocols to establish their identities in the network and secure the network with the establishment for the computer user, mobile user and application and application server.

NUP, NMP and NAP are given to improve the security of the network.

As same as the application and application server, computer user 10 will be given Network User Protocol (NUP) by PCN 100 every time when he (she) connects to the network 100. NUP is different every time when user 10 connects to the network of PCN 100 to identify the user 10 in the network and increase the security of the network 100.

Computer users 10 have their own interface and are connected through gateway routers 16 to the network of PCN 100 (shown as Figure 4). The user's computer 10 in PCN is equipped with CPUs, memories, interface with PCN and input/output for the usages. It is configured to communicate and collaborate with the services and functions of the operating system.

The user's computer is configured for user to employ the applications provided by the network 100 and to manage and control the files provided by the applications.

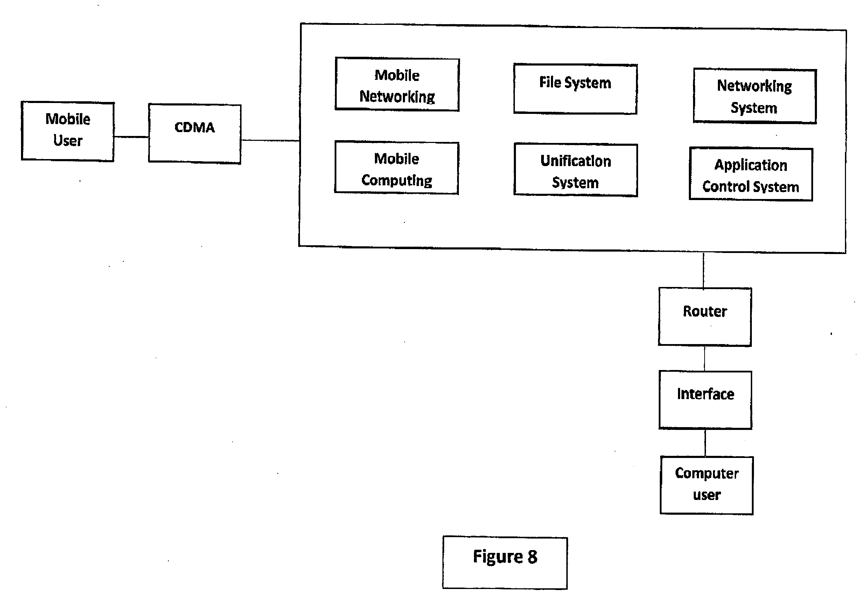

To connect the network 100, the user's computer 10 has an open configuration to be collaborating with the expanding and extension of the network 100. It is shown as follows:
- User Account
   a. Allows user 10 to create and change his (her) username and password;
   b. Allows user 10 to communicate with the service provider, and check his account information with the service provider;
   c. Allows user 10 who has registered into the network 100 to be able to login to the network 100 from any computer (please see flow chart of Figure 8); network 100 need user's original location where he (she) register by the country code and area code to authenticate the user 10;
- System and Security
   a. Allows user 10 to choose the applications 12 that he (she) wants to subscribe;
   b. Allows user 10 to group the computers at home to share files and print at home;
   c. Allows user 10 to record the activities of the grouped computers 10;
   d. Allows user 10 to view the task and status of the performance of the computers at home;
   e. Allow user 10 to back up;
- Hardware and Software
   a. Allows user 10 to install printer and scanner at home;
   b. Does not allow user 10 to install any software which is not associated with the network 100;
- Applications
   a. Allow user 10 to choose the applications to subscribe, which are provided by PCN (all the available applications in the network 100 are ma naged by the service provider 50 and the network).
   b. Allows user 10 to use general features of applications (only from the network) to manage the files and information with the open configuration, such as: open, save, print, exit and so on;

The interface 52 between the user computer 10 and the network 100 is designed to provide all the functions and services of network 100 to users 10. These functions and services include: how to use the applications provided by the network 100 and how to manage the files provided by the applications.

There is a major feature of interface 52 in the network of PCN 100. It is called Network Directory of PCN. It provides uses 10 with a method to find the applications of the network. Network Directory contains database(s) of classified names of applications and the location of the applications which are connected to the applications of operating systems of PCN 100.

The interface also communicates with the network for the computer user. It is the first layer of Transmission Control Protocol. The interface also controls and processes the data for the computer user to communicate with the network 100.

The gateway router 16 is used to connect the user to the local operating system in the network of PCN 100. Router 16 is used because 1) each user is considered as small sub-network containing the multiple workstations such as surveillance cameras, mobile devices, wireless devices, multiple computer stations, and so on; 2) PCN 100 will be designed and developed to function more efficiently and effectively for all the telecommunications, and router 16 is the right device used for he transmission between the user 10 and the local operating system of PCN 100 to meet the demands.

The router 16 is considered as a suitable device to connect the user to PCN 100. It can perform security function and can properly programmed to accept or reject certain type of incoming and outgoing data. The user's interface 52 and router 16 are expected to work together to scan the virus, abnormal codes, or programs for the security purpose of PCN 100.

When user 10 opens an account with the service provider 50, the account number is permanent and used for PCN to set up user's profile in the network 100. In the beginning, user 10 employs his account number to create the username and password for login onto the network 100.

Every time when user 10 logins on the network 100, the user 10 enters his username and password, and PCN 100 verify the username and password to authenticate the user 10 directly. After user 10 is authenticated, the user 10 will be given Network User Protocol (NUP) to identify the user 10 in the network.

Sometimes, user 10 needs to get on the network from the locat on other than the one where the user 10 opens an account and registers (home location). If the location has both same country code and area code as home location (in the same area) that user 10 registers with the network 100, it will be same for user 10 to login to the network 100.

If user 10 wants to get on the network from other location which has different area code or country code from the user's home location, user 10 needs to use home country code and area code, plus username and password to login to the network 100, since the user 10 is registered and profiled by home local operating system 18.

Figure 8 has indicated the flow chart how user 10 logins to the network 100 from the operating system 18 other than his original home location.

It is PCN 100 another unique function that PCN 100 can record all the performances of the user 10 when the user 10 is in the network 100. It can provide us with a secure computer environment and the informational activities of PCN 100.

After the user 10 is authenticated, PCN 100 provides the user 10 with Network User Protocol (NUP) to identify the user 10 in the network 100, and to increase the security of the network 100. NUP is a functional protocol, but it is not transmission control protocol. It can also record all the performance of the computer user in the network 100.

PCN 100 has a major function of fixed routing for the transmission. The function of fixed routing can be established based on the architecture of PCN 100, the fixed addressing system and the rules of fixed routing. The rules of fixed routing say that: any two local users 10 in the same area can exchange the data with their own operating system directly; any two users 10 NOT in same area, but in the same region, can exchange the data with their own regional operating systems 20, any two users 10 in different region can exchange the data through their regional operating systems 20; any two regional operating systems 20 in the country can exchange the data directly; any regional operating system 20 can exchange the data with all local operating system 18 in the region; and global operating system 24 can exchange he data with all regional operating systems 20 in the country; any two global operating systems 24 in the country or in the world can exchange the data directly.

The fixed routing makes PCN 100 very efficient. The encapsulation can have all the addresses of the routing in the data structure with the architecture of PCN 100, fixed addressing system and the rules of fixed routing.

For the email services, PCN can make multiple inboxes for the email account to receive different kinds of emails into different inboxes, such as personal email inbox, business email inbox, commercial email inbox and so on.

Email services in the network 100 will be like electronic USPS services in the network. It will have all the products of USPS today, it will have more services and products for the computer users and mobile users. More, all the services and products are controlled logically and delivered instantly.

Currently, with internet email services, we receive all kind cf email in the inbox, including personal email, business emails, business promotions, government agents and junks. Later, with the network PCN, we can easily sort the important emails from other emails not related to us. I also can sort personal emails from the business email. We will also be able to build up the direct connection with the business emails for solving the problems.

Most importantly, the email service in the network is built up in the email server, which will be in each operating system in the network globally. The connection between the email servers will be directly with Inner Connection, which means that the email in the email server of one operating system will be delivered to the email server in another operating system directly.

In the network 100, I believe that there will be more services to be developed like email service to provide the public services and functions to the computer users and mobile users directly with the independent server in each operating system of the network.

All the email services are developed in the email server, which exists in all the operating systems in the network 100. All the data of emails can be transferred directly between two email servers in the operating systems, since the email servers will have same identification numbers between in the operating systems.

PCN 100 can make it very convenient for computer users 10 to search and employ local businesses. We can develop an application called Local Business. All the local business application can be developed into the local application server. It contains all the local services and business, such as municipal offices, schools, local hospitals, medical offices, restaurants, dry cleaning, libraries, shopping centers, movie theaters and local utility company, cable company and computer service provider, and so on. The application of local business can be developed in the application server, which has its own application name server and server browser for searching in the application server, so that their information doesn't need go all over the world for local users 10, unless the local application server connects to the central application server called Initial Server for people to search globally.

Initial Server has its own Application Name Server and Server Browser for global searching.

All the business information can be considered as local business in the network unless they are connected to the central Initial Server for global searching.

For those small applications and the small business information, vendors can be employed to develop their applications and provides their services to PCN users 10 with the manners of management and maintenance, so that PCN 100 can be a very secure, mature and well managed computer network.

### Physical and Logical Connections

In Figure 3, we use three users 10 in three cities, New York City 36, Seattle 38, and San Francisco 38 in the United States 42 and three users in three cities in China, Beijing, Shanghai and Guangzhou to indicate how they communicate each other with the physical connections and logic connection in the network 100. As shown in Figure 3, one of global regions in the United States 42 includes the regions in Seattle 38 and the regions in San Francisco 38, since there is no global operating system 24 in Seattle. It indicates the concept of the distribution of local operating systems 18, regional operating system 20 and global operating systems 24. They are defined to cover the computer users 10 globally in a proper and efficient manner. It has no technical meaning.

Here are the physical and logical connection of these users 10 to communicate. All the country codes and area codes have no technical meanings:
User A to User B: User A connects to local operating system with area code 718; Local operating system 718 connects to regional operating system 347 in same region; Regional operating system 347 connects regional operating system 253 in Seattle; Regional operating system 253 connects to local operating system 206 connects to its local User B.

It has shown how two users in the different region communicate each other. They communicate through their own regional operating system 20 and their regional operating systems 20 communicate with local operating systems 18 in their own regions to communication with their own local User A and User B in the different regions of New York City and Seattle.

User B to User D: User B at 206 connect to regional operating system 23 in the region and regional operating system 253 connects to regional operating system 415 in the region of San Francisco; regional operating system 415 connects global operating system 510 in the same regional and global operating system 510 connects to foreign global operating system 6545 in Shanghai; then global operating system 6545 connects regional operating system 6145 in the region of Shanghai; regional operating system 6145 in the region of Shanghai; regional operating system 6145 connects local operating system 6567 in the region and local operating system 6567 connects to its local User D in Shanghai.

It has shown how two local users in the different areas go through their local operating systems 18 and foreign local operating system 30, regional operating system 20 and foreign regional operating system 28, global operating system 24 and foreign global operating system 26 to communicate each other globally.

User C to User D: User C connects to local operating system 650; local operating system 650 connects to regional operating system 415 in the region; regional operating system 415 connects to global operating system 510 in the region; global operating system 510 connects foreign global operating system 6545 in Shanghai, China; foreign global operating system 6545 connects regional operating system 6145 in the region; regional operating system 6145 connects local operating system 6567 In the region and local operating system 6567 connects to its local User D.

It has also shown how two local users go through their local operating system 18 and foreign local operating system 30, regional operating system 20 and foreign regional operating system 28, and global operating system 24 and foreign operating system 26 to communicate globally.

User E to User F: User E connects to local operating system 6513 in Beijing; local operating system 6513 connects to regional operating system 6802, regional operating system 6802 in Beijing connects to regional operating system 6374 in Guangzhou; regional operating system 6374 connects local operating system 8335 in Guangzhou; local operating system 8335 connects to User F in the area.

It has shown how two users in the different regions, but same country of China communicate each other.

They have no technical meanings to define local operating systems 18, regional operating systems 20, global operating systems 24 and the foreign global operating systems 26, foreign regional operating systems 28 and foreign local operating systems 30 with the country codes and area codes as indicated above.

However, it shows us the rules of fixed routing, the physical and logical connection with fixed routing as shown in Figure 3.

### Fixed Routing

The routing in the network of PCN 100 is fixed. It is one of the advantages of network of PCN 100. Fixed routing is established on the architecture of PCN, the fixed addressing system and the rules of fixed routing.

The fixed addressing system to define the addresses of elements and applications in the network. The fixed addressing system says: all the addresses the elements and applications in the network contain their own country codes, area codes and identification numbers.

The design of the fixed addressing system results in the efficiency of the network, as well as the convenience of the maintenance. In addition, it also provides the ease for the trouble shooting as well.

The identification number is part of address. The partial identification number of the element in the operating system indicates the function and the scale of the function of the element in the operating system and network, while the partial identification number of application logically connected to the network indicates the classification and the scale of classification of the application.

For example, there is a memory address In the operating system, and it exists in each operating system for the operation of the network. Its identification number will indicate that it is a memory address, and also clearly indicate what kind of memory it is. Maybe its capacity can be indicated in the manual book of specification, but its function and the scale of function will be indicated in its identification number for the easy trouble shooting and convenient maintenance.

So is the identification number of application logically connected to the network. The identification number of application will indicate the classification of the application and the scale of the classification of the application. For example, the application is for the physician office. Its identification will ir dicate all the specialists there are in the physician office.

The rest of Identification number is used for the indications for the purposes of data structure of the network.

All elements in the network 100 will have identification numbers to differ from each other. The identification numbers of the elements are defined by the developer of the network 100 and approved by international authorization.

Beside Network User Protocol and Network Business Protocol in the network are different every time when user and individual business information server are connected to the network 100, each element in the network 100, including each server, protocol, even input/output in headless system will be assigned a permanent identification number by the developer of PCN 100.

Same elements of the operating systems in the different locations will have same identification numbers. For example, the identification number of the same transmission control protocol in the operating system in New York City will be same as the transmission control protocol in San Francisco and the same transmission control protocol in Shanghai, China.

With the different country codes and area codes of the locations, the elements in operating systems can be identified in the network 100. The identification numbers of elements in the network 100 can be defined by the developer and approved by international authorization. So are the country codes and area codes. Defining the element's identification number can significantly improve the efficiency of the network 100.

The identification number will be used for addressing. The address of the element consists of country code + area code + identification number. In this way, PCN will have a fixed addressing system to have fixed addresses for each element.

In PCN, no any two elements with same country code and area code will have same identification numbers; no two elements with same country code and identification number will have same area codes, and any two elements with same area code and identification number will have same country codes. In another word, there are no two elements in PCN with same addresses.

Fixed routing is established based on the architecture of PCN, fixed addressing system and the rules of routing.

The fixed routing is a major feature of the network. The fixed routing is developed based on the rules: two local operating systems can communicate each other directly in the area; all the local operating systems can communicate with the regional operating system in the area directly; all the regional operating systems can communicate each other directly in the country; all the regional operating systems can communicate with all the global operating systems in the country directly, and the all the global operating systems can communicate each other across the country.

When the transmission is domestic, the fixed routing is determined by the sender's operating system to transfer the data in the country.

When the transmission is international, the fixed routing is determined by the sender's operating system within the country. As soon as the data arrives in the foreign country, the global operating system in the foreign country determines the fixed routing in its country.

The rules of fixed routing say that: any two users 10 in the same area can exchange the data with their own local operating system directly; any two users 10 NOT in the different area, but in the same region, can exchange the data with their own regional operating system 20 through their local operating systems 18; any two users 10 in the different regions can exchange the data though their regional operating systems 20 in the regions to their own local operating systems 18; any tow regional operating systems 20 in the country can exchange the data directly; any regional operating system 20 can exchange the data with all local operating systems 18 in the region; and global operating systems 24 can exchange the data with all regional operating systems 20 in the country; any two global operating system 24 can exchange the data directly in the world.

In PCN 100, the headers of data will have all the addresses at one time, unlike internet that transfers data per packet and add the headers of addresses on one by one in the routing. The fixed routing of PCN 100 will have user's address, destinations' address and all the addresses in the routing to accomplish the process of encapsulation.

The fixed addressing system of PCN has defined that the address in the network 100 contains the country code, area code and identification number. Same elements or servers in the different operating systems have same identification numbers. Each operating system has an email server, and all the email servers in the different operating systems have same identification numbers.

In PCN, the transmission between two servers with same identification numbers uses Inner Connection. The email service in the network will provide the computer users and mobile users with the fast, secure, and comprehensive services with the architecture of network 100.

There is Email Server in each operating system in the network 100. The network uses Inner Connection to deliver the email message in the network 100. Inner Connection defines that the transmission between two elements with same identification numbers can be connected directly. Inner Connection is used for email delivery in the network 100.

For the global email transmission, Inner connection can be applied within the country. After the email arrives in the foreign country, Inner Connection will be applied to deliver the email directly between two email servers in the different operating systems in the foreign country.

### The management and Control of Content of PCN

PCN 100 enables the developers and service provider 50, as well as the user 10 to manage and control the contents of applications. PCN 100 enables the computer users to choose the applications to subscribe.

PCN 100 and service provider 50 can sort all the applications by the contents, and the service provider 50 can organize the applications by separating them individually or in the packages by the content for the computer users to subscribe.

Children can be stopped being exposed to all improper materials and contents that show in the internet today. Making the computer user choose the applications certainly helps our young generations growing and learning well. The parent s of young children can easily keep improper material from their children by choosing the applications to subscribe.

### Further Notes

These Further Notes are intended to augment, but not to supersede, the previous explanations. If there any unsolvable conflict between previous wording and the wording presented here, the previous wording shall prevail.

The present divisional application is directed to the architecture of the closed network which logically connects the global computer users, mobile users and business information servers (called applications and application servers below) with the local operating systems, regional operating systems and global operating systems distributed globally. The network provides the centralized and fixed services and functions to the global computer users and mobile users and performs the centralized and fixed services and functions with logical control, the fixed routing, and the fixed addressing system. With the architecture of the network, the network connects the global computer users and mobile users to have local searching and global searching of all the application connected to the network. The computer users and mobile users search in the closed network PCN 100 with the application names directly. Therefore, there is no domain names, .com, .edj, .org, and so on used in the network 100.

The computer users and mobile uses are connected to their local operating systems of the network through their own gateway routers. With assigned Network User Protocol (NUP) for the computer user, Network Mobile Protocol (NMP) for the mobile user, and Network Business Protocol (NBP) for the applications after they are connected to the network 100, all the computer users, mobile users and applications logically connected to the network 100 will be identified, and 7 layers of transmission control protocols of the network 100 can be defined, i.e. Interface, Data Transfer, Network, Transmission, Application and Control and management. The transmission in the network can be performed with the fixed routing and logical control.

All the operating systems, applications, application servers and elements in the operating systems are addressed with the country codes, area codes and their own identification numbers.

With the fixed addressing system and fixed routing, there are more unique features and functions that can be established in the network. The security of the network can be increased greatly.

The invention is defined by the approved claims and written on the parent application directly and unambiguously.

The network is designed to logically connect the computer users and mobile users, applications, and application servers globally, so the computer users and mobile users can communicate each other globally through the network 100.

The network is a closed network. The computer user logins onto the network with his or her own username and password. The network authenticates the computer users and mobile users directly.

In the internet, all the applications are connected to the network by web browser, and computer users search them in an open system interconnections. Unlike internet, the network connects all the applications and their application servers logically into the network and the computer user can search them in the closed network 100.

The interface between the computer user and network, i.e., the interface connecting the computer's workstations at home to form the sub-network, is designed to provide all the function and services of the network to the computer user. The functions include in communicating with the network for the computer user and mobile user, managing and control the files of applications of the network 100. The network itself is to deliver the centralized and fixed functions and services to the computer users and mobile users, as well as transfer the data from one place to another.

The functions of interface of the computer user are to connect all the workstations at home to form a sub-network. The interface functions as the central server of the sub-network. All the workstations, such as telephone service, security camera service, printing service, computers can be included in the sub-network. The interface of the computer user also provides the services and functions for the computer user and mobile user. Therefore, the interface will be capable of communicating with the network for all kinds of data, such as regular data, voice data, imagine data, video data and so on.

The interface also has functions to process and control the data for the workstations of the computer user to communicate with the network. At mean time, the interface has functions to manage and control the files for the workstations of the computer user to receive from the network.

More importantly, interface contains Network Directory which has a database of the information of applications and their geography for the computer user and mobile user to search in the closed network. Please also see Embodiment 3.

There is a major feature of interface in the network. It is called network directory. It provides the computer users with the method to find (search) the applications and features of the network. Network Directory contains the database of classified names (classifications) of the applications and geography, which are connected to the application with the same codes of classification of the applications in the network 100.

To provide all the functions and services of the network for the computer user, the interface is designed to process and control the data for the computer user, so that the interface can communicate with the network for the computer user. The interface is considered as the central server to control and manage the workstations of the sub-network at home, and communicate with the network.

Network Directory in the interface has the database which contains all the classifications of the applications. The classifications of the database have same codes of the classifications of the application in the network. The codes of classification in the database are standard and same for the classifications of the applications as the applications in and network 100. For example, if 000 0001 in the bytes indicate the classification of the physician in the database, it is same as the codes of the classification of the application in the network. If 0001 0001 in the database indicate the classification for the dermatologist, it is same code the dermatologist in the network 100. The searching systems of the network 100 is developed on the standard coding of classification and geography of the applications as same as the coding of the classification and geography in the database of Network Directory.

The database of Network Directory also contains the information of geography, by names of country, names of city or the zip codes for the computer users to define the type of searching, including local searching and global searching.

Network is designed for the computer users to searching in the closed network. The computer user can define the type of searching by inputting the information of classification or geography, or both at the interface. If the computer user only inputs the classification of the application for searching, the searching will be defined as global searching. If the computer user inputs the classification of the application along with the location or locations, the searching will be defined as local searching.

The gateway router is used to connect the computer user to the local operating system of the network. The router is used because 1) each user is considered as the small-network containing the multiple computer stations, and 2) the network will be designed and developed to function more efficiently and effectively for all the telecommunications, and the gateway router is the right device to be used for the transmission between the user and the local operating system to meet the demands of security of the network.

The gateway router is considered as a suitable device for logically connecting the computer user to the network. It can perform security functions and can be properly programmed to accept or reject certain type of incoming and outgoing data (in the network 100, the incoming data and outgoing data will be separated). The router is expected to scan the virus, abnormal codes, or programs for the security purpose of the network 100.

Using gateway router can increase the security of the network greatly. We can program the router to cooperate and collaborate with the local operating system and applications to accept the normal data, or to reject the abnormal data for both incoming and outgoing data stream.

Using gateway router can also function to cooperate and collaborate with local operating system to centralize/decentralize the computer users to be connected to the network and communicate with the network 100.

The gateway can be used to increase the security of the network 100 by connecting the individual computer user directly to the local operating system, who is authenticated by the network 100.

When the computer user opens an account with the service provider, the account number is permanent and used for the network to set up the user's profile in the network. In the beginning, the computer user employs his account number to create the username and password for the network 100.

Every time when the computer user gets on the network, the user enters his username and password, and the network authenticates the compute directly by verifying the username and password with the local operating system to authenticate the user. After the user is authenticated, the network 100 will give the user Network User Protocol (NUP) to identify the user in the network 100. NUP is used to Identify the computer user in the network. But, NUP is not transmission control protocol. NUP is not the layer of transmission control protocols of the network 100.

Sometimes, the computer user needs to login onto the network from the location other than the one where the user opens an account and registers (home location). If the location has both same country code and area code as the home location that the user registers with the network, it will be same for the user to login onto the network 100.

If user wants to login onto the network from other location wh ch has different area code or country code, the user needs to use home country code and area code, plus username and password to login onto the network, since the user is registered and profiled by the home local operating system. The network 100 will verify the user with his home local operating system to authenticate the user.

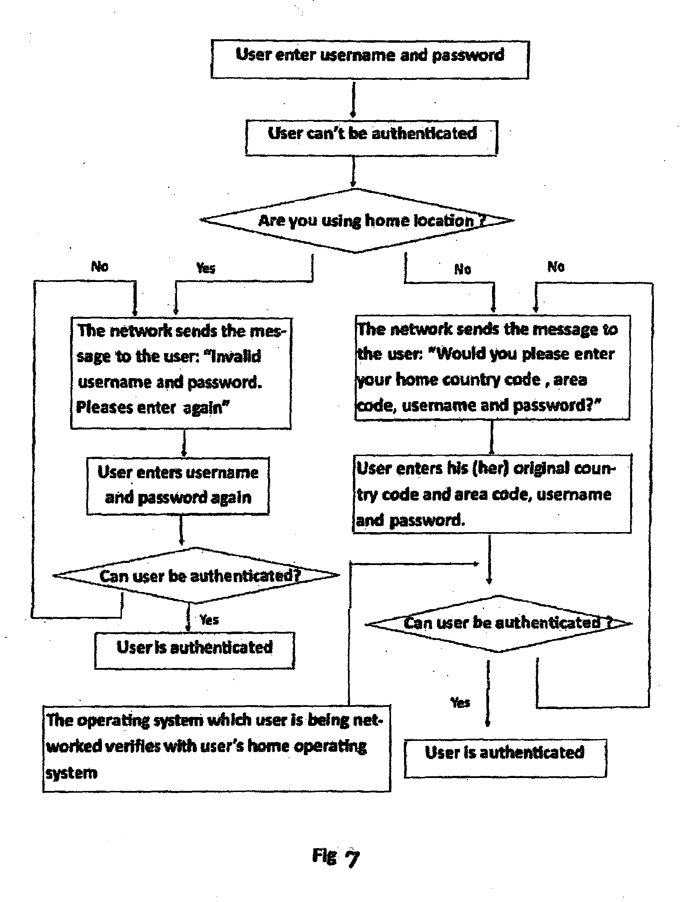

Figure 7 has indicated the flow chart how the user login onto the network from the location different from his home location.

When the computer user logins onto the network, the computer user will be assigned a protocol called Network User Protocol (NUP). NUP is a functional protocol and used to identity the computer user in the network and communicate in the network. NUP is not the transmission control protocol.

When the mobile user logins onto the network, the mobile user will be assigned a protocol called Network Mobile Protocol (NMP) NMP is a functional protocol, and used to identify the mobile user in the network and communicate in the network. Same as Network User Protocol, Network Mobile Protocol is not transmission control protocol.

The application and application server logically connected to the network will be assigned a protocol called Network Business Protocol (NBP) NBP is a functional protocol and used to identify the application and its application server in the network and communicate in the network. Same as Network User Protocols and Network Mobile Protocol, Network Business Protocol is not transmission control protocol.

Beside NUP and NMP in the network are different every time when computer user and mobile user are connected to the network to increase the security of the network 100, each element in the network, including each server, even input/output port and so on will be assigned a permanent identification number in order to have the fixed address.

These protocols assigned to the computer user, mobile user, applications, and the application servers need establish the transmission control protocols in the network. 7 layers of transmission control protocols of the network 100 are defined for the transmission of data. They are: Interface, Data Link, Transfer, Network, Transmission, Application, and Management and Control.

Network Directory is designed for the computer users to searching in the closed network. The computer user can define the searching by inputting the information of searching (classification and geography). If the computer user only inputs the classification of the application for searching, the searching will be defined global searching. If the computer user inputs the classification of the application along with the location or locations, the searching will be defined as local searching.

PCN 100 is a closed network and all its performance is controlled logically. Therefore, the transmission in the network 100 does not need the suite of transmission control protocol and computer user identification for the transmission, as internet does.

NUP is assigned to the computer user who is logically connected the network and identified in the network, and NUP is not the transmission control protocol. Therefore, NUP is not the layer of the transmission control protocol. The interface of sub-network of home computer stations becomes the first layer of transmission control protocol TCP.

However, as the first layer of TCP, it has much more functions. It is not confusing that the NUP protocol will be used to identify the user in the network, as well as function for the computer user to communicate in the network. It is not the transmission control protocol. It does not work with the TCP as a suite, unlike IP/TCP suite for the internet. In another word, the interface, the first layer of TCP interface is different from NUP (Network User Protocol).

The layer of transmission control protocol of network functions for: logically connects the computer users and mobile users, as well as the applications and their application servers; It also communicates with the interface of the computer users and mobile users, and cooperate and collaborate with the operation servers in the operating systems of the network 100.

The layer of transmission control protocol of management and digital control will be needed to coordinate and collaborate with logical control for all the functions and services of the network.

The addressing system of the network is different from the internet. All the elements in the operating systems, applications, application servers and other parts are given their fixed addresses, which consists of country code, area code and their own identification number. While the country codes and area codes are given by the international organization or authority, the identification numbers are used to identify the elements, applications, application servers and parts in the network.

The fixed addressing system to define the addresses of elements and applications in the network. The fixed addressing system says: all the addresses the elements and applications in the network contain their own country codes, area codes and identification numbers.

The design of the fixed addressing system results in the efficiency of the network, as well as the convenience of the maintenance. In addition, it also provides the ease for the trouble shooting as well.

The identification number is part of address. The partial identification number of the element in the operating system indicates the function and the scale of the function of the element in the operating system and network, while the partial identification number of application logically connected to the network indicates the classification and the scale of classification of the application.

For example, there is a memory address in the operating system, and it exists in each operating system for the operation of the network. Its identification number will indicate that it is a memory address, and also clearly indicate what kind of memory it is. Maybe its capacity can be indicated in the manual book of specification, but its function and the scale of function will be indicated in its identification number for the easy trouble shooting and convenient maintenance.

So is the identification number of application logically connected to the network. The identification number of application will indicate the classification of the application and the scale of the classification of the application. For example, the application is for the physician office. Its identification will indicate all the specialists there are in the physician office.

The rest of identification number is used for the indications for the purposes of data structure of the network.

All the elements in the network have their permanent identification numbers, including the servers, applications, protocols, even the input/output in the headless system. The location of the elements will be identified by their country codes and area codes. The functions and classifications will be identified by their identification numbers.

The identification number identifies the functions and other features of element, such as what kind of memory that the element functions, and the purpose of memory that the element functions. The element only uses partial identification number to identify its functions in the network. The other part of identification number can be used for the purpose of data structure, while the partial identification numbers of applications are used for the classifications and the location of the applications. The rest of identification number can be used for the data structure.

The partial identification number of the element, application and application server are coded in standard by their functions and scale of the functions. Classification and scales of the classification, as well as the relationship between and applications and application servers. The rest of their identification numbers can be used for the data structure and other purposes.

After the network logically connects the computer users and mobile users to the network, the connection will be completed after the network logically connects the business information (applications) and business information servers (application servers) to the network. There is an application name server for the application server. Application Name Server (ANS) in the network is different from the DNS in the internet. DNS resulted in the website addresses and website pages in the internet using .com, .org, .edu and so on. ANS will enable the computer users and mobile users to use application names directly, so that the computer users and mobile users do not have to remember anything specifically as they did in the internet. We use application name directly in the network 100.

For example, there is no Microsoft.com used for the network 100. Instead, we use Microsoft for the searching of Microsoft Corporation's Information.

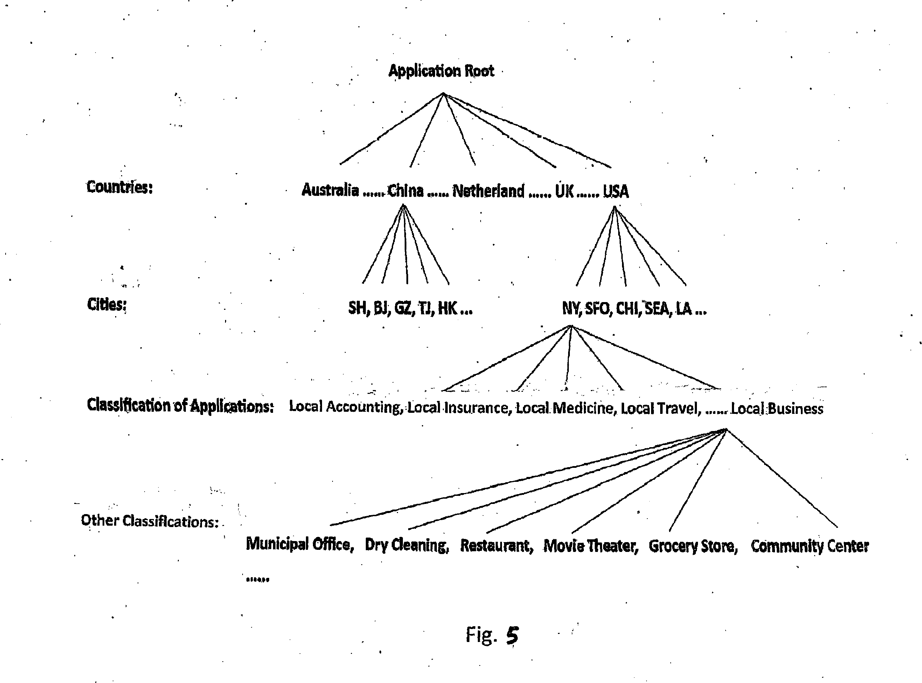

The applications logically connected to the network are used for searching, and the application is the root of searching in the closed network 100. (shown in Figure 5)

We develop all the applications into the application servers connected logically by the network. Application server contains the applications which are developed in the application server. So are other application servers, (shown in Figure 4)

There private applications, which are developed into the private application servers. There are also public applications, which are developed into the public application servers. In addition, there are secret applications, which only authorized personnel can access, are developed into the secret application servers.

The applications are developed in the application server. There are many application servers in the network. Each application server has its own ANS which identifies the applications developed in the server. ANS is used for the local searching in the application server. It can also be connected to the central ANS in the central server called Initial Server for the global searching.

At mean time, the application servers can be connected to each other for the scales of local searching. It means by the scales of local searching that the searching could be extended in defined multiple cities. If the searching is performing in the defined location(s), the searching is called local searching.

All the applications developed in the application server(s) have the identities of the application server(s) in their identification numbers, in which they are developed. All the application servers have the identities of the applications which are developed in the application servers. All the application servers have identities of other application servers which they are associated with.

The application can be developed in the multiple application servers in multiple operating systems. Therefore, the application developed in the multiple application servers has all the identities of the application servers in its identification number, in which it is developed.

The application developed in the application server(s) could have one name or multiple names for the convenience of searching. Sometime, the computer user cannot remember the searching name of the product, but he knows the name of company who makes it. The name of company certainly should become the name of application for the convenience of searching. The computer user can also search with multiple names within the location to make the searching efficient.

In the internet, all the compute users and applications are connected to the network by web browser, and the computer users search with an open system interconnection. Unlike the internet, the network 100 logically connects all the computer users and mobile users, as well as the applications and application servers into the network for the computer users and mobile users to search in the closed network 100. (Shown as Figure 5)

The network 100 makes it more convenient for the computer users and mobile users to search by employing local business information. We can develop all the local business in Hershey, PA, U.S.A into one application to be searched in the network 100. All the local business can include into the municipal offices, schools, local hospitals, medical offices, restaurants, dry cleanings, libraries, shopping centers, movie theaters and local utility companies, cable companies and computer service provider, and so on. The application server, in which the local business application is developed, will have the server ANS with the local business application indicated in the branch of ANS in detail. By this design, we can have more information about local business, local people, and local social connections in the network 100 with clear arrangement for the maintenance and security.

The local business application can be connected to the central Initial Server for the global searching.

The searching starts with the interface, which has Network Directory with a database of the classifications and locations of the applications. When the computer user defines the classification without defining the location, the searching becomes the global searching. When the computer user defines the both classification and location, the searching becomes the local searching.

As we know, application is the root of searching in the network, unlike the internet that has the geography as the root of searching. In the network, the application can be connected to the operating system(s) as per the business owner's will. It means that some operating systems can have a large amount of applications connected to the network to solve the problems, we need a large capacity of operating systems, and the sophisticated coordination and collaboration between two operating system or more.

The searching system in the network 100 is completely different from the searching system in the internet, to stop manipulation in the network 100. The differences show as 1) application is the root of searching; 2) thee are local searching and global searching; 3) applications are developed into the application servers; 4) ANS and application server browser are used for application server to conduct the local searching and global searching; 5) the applications can be connected to central ANS Initial Server; 6) there is no Web Browser used for internet in the closed network for security reasons; 7) for the scale of local searching, it is performed by multiple application servers defined by the computer users for the scale of local searching.

Based on the architecture of the network and the features of logical control and fixed addressing system with the country code, area code and identification number, the fixed routing to transfer the data can be established in the network. It means that the sender's address, receiver's address and all the addresses between the sender and receiver in the routing according to the rules of fixed routing will be determined.

Here are the rules of the fixed routing: any two local operating systems can communicate each other directly in the region; any local operating system can communication with the regional operating system in the region; two regional operating s can communicate each other in the country; any regional operating system can communicate with the global operating system in the country; two global operating systems can communication each other globally.

The fixed routing is determined by the sender's local operating system if the transmission is domestic. If the transmission is global, the sender's local operating system is configured to only determine the routing within the sender's country, and the global operating system in the receiver's country is configured to determine the fixed routing in the receiver's country.

With the 7 layers of Transmission Control Protocol, TCP Availability Server is designed in each operating system to transfer the data more efficiently. The entire transmission from the sender to receiver is controlled logically. TCP Availability Server logically connects to the all TCP protocols in the operating systems and have all the Information about the TCP protocols' availabilities.

If the traffic occurs, TCP Availability Server will calculate the time of delay with Time/Routing Table and make an alternative solution to solve the problem. Time/routing Table records the time from one place to another in the fixed routing. The time in the table will be adjusted if the traffic occurs.

Email server in each operating system in the network makes the email service in the network 100 very efficiency. With the feature of Inner Connection of the network 100, the email can be delivered from email server in one operating system to another directly.

Email services in the network 100 will be like electronic USPS services in the network. It will have all the products of USPS today, it will have more services and products for the computer users and mobile users. More, all the services and products are controlled logically and delivered instantly.

Currently, with internet email services, we receive all kind of email in the inbox, including personal email, business emails, business promotions, government agents and junks. Later, with the network PCN, we can easily sort the important emails from other emails not related to us. I also can sort personal emails from the business email. We will also be able to build up the direct connection with the business emails for solving the problems.

Most importantly, the email service in the network is built up in the email server, which will be in each operating system in the network globally. The connection between the email servers will be directly with Inner Connection, which means that the email in the email server of one operating system will be delivered to the email server in another operating system directly.

In the network 100, I believe that there will be more services to be developed like email service to provide the public services and functions to the computer users and mobile users directly with the independent server in each operating system of the network.

With the architecture and the features of the network 100, it allows the network to record all the performance of the computer users, mobile users, and applications in the network 100. With the recording server in each operating system to cooperate and collaborate each other, to trace the performance of the computer users and mobile users and their engaged applications. The security of the network 100 can be increased greatly with the recording system.

The data structure of the network can be designed for the high security to meet the requirement of global telecommunication. For the global telecommunication, we will have standard data structure. Inside the country, we can design even more sophisticated data structure to meet own requirements of security.

The authentication of the computer users and mobile users by the network itself has increased the security of the network 100. The fixed routing to transfer the data makes the transmission very secure through the logical control. In the data structure, all the addresses in the fixed routing will be all indicated. With the feature of tracing and recording and logically controlled performance, the problems in the network 100 will be detected every time when they occur.

The gateway router can be programmed to reject the abnormal incoming and outgoing data packets. The operation servers of the network 100 can set up he security codes to collaborate with all eh application server in the network to scan and detect the normal or abnormal applications. The application servers can set up their own security codes to secure the data for the transmission. Application servers are also to scan and withdraw all the abnormal packets of data if the attacker uses any abnormal codes or programs to attack.

There is File System In the network 100 used for the mobile users to store the information and to be unified with their home computers. When the computer user opens the account with the service provider, they will give their mobile computers IDs, so that the network will have initial link with the home computers and mobile computers of the user. With initial link of user's home computers and mobile computers, the unification system of the network 100 can unify the user's mobile usage with his (her) home computers. (Shown as Figure 8)

## Claims

1. The network of PCN 100 Is a closed network, provides the centralized and fixed services and functions to the computer users and mobile users who are logically connected to the network 100, authenticates the computer users and mobile users directly, logically connects the applications and application servers to the network 100 for the computer users and mobile users to search in the intersection system of the network 100 with the features of the fixed addressing system and the fixed routing for the data transmission, comprising the architecture of:
- Global operating systems;
- Regional operating systems;
- Local operating systems and
- Transmission system
distributed globally, wherein the local operating systems are designed to logically connected the computer users and mobile users in the areas, and cooperate and collaborate with other operating systems in the closed network,
wherein the addresses of the network are fixed with country codes, area codes and identification numbers,
wherein the routing is fixed to transfer the data with the rules as:
- Any two global operating systems (24, 26) can communicate with each other globally;
- Any global operating system can communicate with each regional operating system (20) directly within the country;
- Any two regional operating systems within the same country can communicate with each other directly;
- Any regional operating system can communicate with all local operating systems (18) directly within the same region and
- Any two local operating systems can communicate each other directly in the same region of the same country.
Wherein, for global transmission of data, the sender's local operating system is to determine the fixed routing within the sender's country, and after the information arrives in the receiver's country, the global operating system in the receiver's country is to determine the fixed routing in the receiver's country, wherein the sender's address, receiver's address and all the addresses in the fixed routing of the country are in the headers of the data structure, and
Wherein the interface connecting the workstations to form the sub-network at home of the computer user as the central server of the sub-network and the interface of the mobile user have Network Directory, communicate with the network for the computer user and mobile user, provide the functions and services of the network 100 for the computer user and mobile user, and processes, manages and controls the data and files for the computer user and mobile user.
Wherein the individual local businesses can be developed by Application, and the applications of the local businesses can be developed in Application Server both logically connected to the closed network 100 for the computer user and mobile user to search in the intersection system of the network 100.

2. The network 100 of claim 1, wherein the architecture of the network is a closed network, and all the computer users and mobile users are authenticated by the network 100 directly by verifying the username and password established by the computer users and mobile users with the local operating system with the information from the service provider, which are established when the computer users and mobile users register for the services of the network 100.

3. The network 100 of any one of claims 1 to 2, wherein the network is featured with the fixed addressing system, i.e., the address of element in the network 100 consists of the country code, area code and its permanent identification number which indicates the functions or classifications of the element, so that no any two elements with same country code and area code will have same identification numbers, no any two elements with same country code and identification numbers will have same area code, and no any two elements with same area code and identification number will have same country code, so that the address of the element in the network 100 indicates at least not only the location of the element, but also the function or classification and the scale of the function or classification of the element in the network 100.

4. The network 100 of any one of claims 1 to 3, wherein the fixed address of the application connected to the network 100 also indicates the identification(s) of the application server(s) in which the application is developed, so that the application server indicates the identifications of application which are developed in the server, and the identification(s) of other application server(s) which it is associated with for the searching of intersection system.

5. The network 100 of any one of claims 1 to 4, wherein Network Directory in the interface of the computer user and mobile user contain the database that have the classifications of applications associated with their names in the database as well, coded same as the classifications of the applications in the network 100, and the geography of the applications in the database in the name of country, city, even zip code, coded same as the country code and area codes identifying the application in the network 100, so that the searching can be defined at the interface and linked directly the applications in the network 100.

6. The network 100 of any one of claims 1 to 5, wherein the searching can be defined at the interface of computer user and mobile user for local searching c r global searching, i.e., the local searching is defined when the computer user or mobile user enters both the classification and geography for searching, and the global searching is defined when the computer user or mobile user enters the classification or geography only.

7. The network 100 of any one of claims 1 to 6, wherein the gateway router is used to for the computer user to transmit the data to the local operating system and programmed to cooperate and collaborate with the local operating system to accept or reject the incoming and outgoing data, as the gateway router has the function to cooperate and collaborate with the local operating system to centralize/decentralize the computer users to be logically connected to the network in serial and parallel logical connections.

8. The network (100) of any one of claims 1 to 7, wherein the central application server called Initial Server in the network 100, to which the applications and their application servers are connected for the global searching, while the searching in the defined application server or application servers is for the local searching.

9. The network (100) of any one of claims 1 to 8, wherein there are Application Name Server and Server Browser in each application server, which can be connected to the central server of the network 100 called Initial Server with the central Application Name Server and central Server Browser itself.

10. The network (100) of any one of claims 1 to 9, the application logically connected to the network is the root of searching systems of the network 100, which are defined as local searching and global searching.

11. The network (100) of any one of claims 1 to 10, wherein the computer user is given Network User Protocol (NUP) when the computer user is being logically connected to the network (100) to identify the computer user in the network 100, wherein the mobile user is given Network Mobile Protocol (NMP) when the mobile user is being logically connected to the network identify the mobile and wherein the application is given Network Application Protocol (NAP) to identify the application logically connected to the network in the network 100, in which none of NUP, NMP and NAP are Transmission Control Protocol (TCP), because unlike internet, there is no need to have TCP work with the user identity as suite in the network 100 with the efficiency of logical control.

12. The network 100 of any one of claims 1 to 11, further comprising layers of Transmission Control Protocol, i.e., Interface, Data Link, Transmission, Network, Transport, Application, and Management and Control, 7 layers of Transmission Control Protocols of the network 100.

13. The network 100 of any one of claims 1 to 12, further comprising TCP Availability Server, which has the dynamic information of the availability of all the protocols of TCP in the operating systems in the network 100.

14. The network 100 of any one of claims 1 to 13, further comprising the server called Time/Route Table, which contains the time of transmission dynamically from the protocol to another with the calculation in order to efficiently control the transmission in the network 100.

15. The network 100 of any one of claims 1 to 14, further comprising the file system to store the information of mobile user and unify the mobile users with their home computers.

16. The network 100 of any one of claims 1 to 15, further comprising the record system to record the operations of the computer users and mobile users in the closed network 100 for the security.

17. The network 100 of any one of claims 1 to 16, wherein the security of the network 100 is highly increased to make a safe, efficient and sufficient working environment by the architecture of the closed network using logical connection, logical control, the fixed and centralized services and functions and fixed addresses and fixed routing in the network 100.
